# EUROPÄISCHE PATENTANMELDUNG

(11) **EP 3 293 599 A1**
(43) Veröffentlichungstag der Anmeldung: **14.03.2018**
(21) Anmeldenummer: 17190025.1
(22) Anmeldetag: 08.09.2017
(51) Int. Cl.: G05D 16/06

(54) **DRUCKMINDERVENTIL**

(30) Priorität: 08.09.2016 DE 102016116848
(71) Anmelder: Rausch und Pausch GmbH, 95100 Selb (DE)
(72) Erfinder: KÖPPEL, Martin, 95182 Döhlau (DE); KEMNITZ, Rocco, 08606 Bobenneukirchen (DE)
(74) Vertreter: Klunker IP Patentanwälte PartG mbB

(57) **Zusammenfassung**

Ein Druckminderventil einer Luftfederung von Kraftfahrzeugfahrwerken stellt bei schwankendem Eingangsdruck einen konstanten Ausgangsdruck bereit. Das Druckminderventil besitzt ein Gehäuse (1) mit einer allgemeinen Längsachse (2), mindestens einer Fluideingangsöffnung (3) und mindestens einer axialen Fluiddurchtrittsöffnung (4). In dem Gehäuse ist ein Ventilstößel (5) mit einem Ventilkörper (5d) verschieblich gelagert, der mit der axialen Fluiddurchtrittsöffnung ein Sitzventil (8) bildet. Eine ortsfest in dem Gehäuse angeordnete elastische Membran ist mit dem Ventilstößel gekoppelt und bildet zwei axial wirkende Differenzdruckflächen aus. Eine Druckrückführpassage (13) durchsetzt den Ventilstößel (5) und leitet einen stromabwärts des Sitzventils herrschenden Ausgangsdruck auf die elastische Membran. Die Wirkflächen des Ventilstößels, auf die der an der Fluideingangsöffnung (3) herrschende Eingangsdruck wirkt, sind so gestaltet, dass sich daran anliegende axiale Druckkräfte gegenseitig kompensieren, so dass der Eingangsdruck keine axiale Stellkraft auf den Ventilstößel ausübt. Zur Reduzierung der Hysterese kann der Ventilstößel (5) in einer Spaltdichtung verschieblich gelagert sein.

## Beschreibung

Die Erfindung betrifft ein Druckminderventil, insbesondere ein Druckminderventil für Pneumatiksysteme, wie sie zum Beispiel in Luftfederungen von Kraftfahrzeugen einsetzbar sind. Dementsprechend betrifft die Erfindung desweiteren ein Luftfedersystem eines Kraftfahrzeugfahrwerks.

Druckminderventile werden in der Fluidtechnik für die Reduzierung eines Eingangsdrucks auf einen festen Zielausgangsdruck eingesetzt. Die Anwendungsbereiche sind vielfältig. Druckminderventile gibt es sowohl für hydraulische als auch für pneumatische Anwendungen. Weit verbreitet sind zum Beispiel Druckminderventile in Gasversorgungsanlagen. Druckminderventile mit hohen Eingangsdrücken werden zum Beispiel für Gasflaschen mit bis ca. 200 bar Speicherdruck eingesetzt. Für diesen Einsatzbereich sind Regelfehler, insbesondere Druckanstiege, bei sinkendem Speicherdruck bekannt. Zur Reduzierung dieses Regelfehlers werden zum Teil zweistufige Druckminderventile eingesetzt.

Neben aktiv regelnden Ventilen werden zur Druckreduzierung auch pneumatische Drosseln eingesetzt. Jedoch sind hierfür zwei Voraussetzungen notwendig, um den Ausgangsdruck konstant zu regeln, denn es müssen einerseits der Eingangsdruck und andererseits der Volumenstrom konstant sein. Dies trifft für viele Anwendungen nicht zu.

Mechanische Druckminderventile, wie das der vorliegenden Erfindung, basieren im Funktionsprinzip darauf, dass sich in Abhängigkeit von der Regelgröße (Ausgangsdruck) der Strömungsquerschnitt im Ventil selbsttätig verändert. Diese Veränderung wird durch Kraftdifferenzen auf den aktiven, bewegten Bauteilen, den sogenannten Stellgliedern, im Ventil erreicht. Da das Ventil auf den Ausgangsdruck reagieren soll, muss die Bewegung des Stellgliedes im Ventil mit dem Ausgangsdruck verbunden sein. Das wird dadurch erreicht, dass das Stellglied an einer Stirnseite mit dem Regeldruck (Ausgangsdruck) des Druckminderventils verbunden ist und damit eine Stellkraft abhängig vom Regeldruck erzeugt wird. Um diese Kraft zu erzeugen, muss an den referenzierenden Stirnflächen, das heißt an den Stirnflächen, die der mit dem Regeldruck beaufschlagten Stirnfläche gegenüberliegt, ein konstanter niedrigerer Druck anliegen, der in der Regel der Atmosphärendruck ist.

Bei niedrigen Regeldrücken, so wie im konkreten Anwendungsfall der vorliegenden Erfindung bei einem Luftverbraucher in einem Kraftfahrzeug, bei dem der Differenzdruck auf bis zu 0,5 bar sinken kann, sind die mit dem Regeldruck (Ausgangsdruck) erreichbaren Stellkräfte limitiert. In solchen Fällen werden die Stellkräfte durch die Verwendung von Stellelementen mit geometrisch entsprechend großen Differenzflächen auf die notwendigen Niveaus angehoben, beispielsweise durch Verwendung von Elastomermembranen mit großen Durchmessern von zum Beispiel 100 mm. Hohe Stellkräfte sind insbesondere deshalb notwendig, um einerseits die Stellbewegung zum Beispiel gegenüber einer Federvorbelastung überhaupt ausführen zu können und um andererseits Störeinflüsse, die beispielsweise aus der Reibung in der Lagerung der Stellgliedbaugruppe herrühren, Reibung an dynamischen Dichtungen und dergleichen, zu überwinden und die daraus resultierende Hysterese der Druckregelung begrenzt zu halten.

Das erfindungsgemäße Druckminderventil wird vorzugsweise im Bereich der Pneumatik eingesetzt, insbesondere im Bereich von Kraftfahrzeugluftfedersystemen. Das Druckminderventil dient dazu, einen Luftverbraucher im Fahrzeug mit konstantem Druck zu versorgen. Dabei erfolgt die Druckversorgung üblicherweise aus einem Speicher heraus, dessen Fülldruck je nach Füllzustand des Speichers schwankt. Das Druckminderventil übernimmt dabei die Funktion, für den Verbraucher einen konstanten Versorgungsdruck unabhängig vom schwankenden Fülldruck des Speichers bereitzustellen.Dieser Versorgungsdruck kann bei relativ niedrigen 0,5 bar bis 1,0 bar liegen, während sich der Fülldruck des Speichers im Vergleich dazu auf einem relativ hohen Druckniveau von bis zu 20 bar bewegt. Bei voll aufgeladenem Speicher beträgt das Druckverhältnis am Druckminderventil somit bis 20 bar zu 0,5 bar.

Aufgabe der vorliegenden Erfindung ist es, ein Druckminderventil der eingangs beschriebenen Art vorzuschlagen, welches einen möglichst konstanten Ausgangsdruck bei schwankendem Eingangsdruck liefert.

Diese Aufgabe wird durch ein Druckminderventil mit den Merkmalen des unabhängigen Anspruchs 1 gelöst. In davon abhängigen Ansprüchen sind vorteilhafte Weiterbildungen und Ausgestaltungen der Erfindung angegeben.

Gemäß einer bevorzugten Ausführungsform umfasst das Druckminderventil, welches bei schwankendem Eingangsdruck einen konstanten Ausgangsdruck bereitstellt, zunächst einmal ein Gehäuse mit einer allgemeinen Längsachse, mindestens einer Fluideingangsöffnung und mindestens einer axialen Fluiddurchtrittsöffnung. In dem Gehäuse ist entlang der Längsachse ein Ventilstößel verschieblich gelagert, der einen Ventilkörper besitzt, welcher mit der mindestens einen axialen Fluiddurchtrittsöffnung zusammen ein Sitzventil bildet. In dem Gehäuse ist desweiteren eine elastische Membran ortsfest angeordnet, die mit dem Ventilstößel gekoppelt ist und zwei axial wirkende Differenzdruckflächen bildet. Durch Beaufschlagen der Differenzdruckflächen mit unterschiedlichen Drücken bewegt sich somit der Ventilstößel in dem Gehäuse axial vor und zurück. Zu diesem Zweck ist eine Druckrückführpassage vorgesehen, die einen stromabwärts des Sitzventils herrschenden Ausgangsdruck, den Regeldruck, auf eine der beiden Differenzdruckflächen der elastischen Membran leitet. Auf der anderen der beiden Differenzdruckflächen liegt vorzugsweise Atmosphärendruck an. Besondere Bedeutung kommen den Wirkflächen des Ventilstößels zu, auf die der an der Fluideingangsöffnung herrschende Eingangsdruck wirkt. Diese Wirkflächen des Ventilstößels sind so gestaltet, dass sich die daran anliegenden axialen Druckkräfte gegenseitig kompensieren, so dass der Eingangsdruck keine axiale Stellkraft auf den Ventilstößel ausübt. Dadurch wird der Einfluss eines sich ändernden Eingangsdrucks auf die Druckregelung des Druckminderventils minimiert.

Um die vom Eingangsdruck auf den Ventilstößel ausgeübten axialen Druckkräfte gegenseitig aufzuheben, sieht eine bevorzugte Ausführungsform der Erfindung vor, dass einerseits der Ventilkörper des Ventilstößels die mindestens eine axiale Fluiddurchtrittsöffnung ausgangsseitig verschließt und andererseits eine maximale radiale Querschnittsfläche des Ventilstößels in einem Bereich des Ventilstößels, in dem der an der mindestens einen Fluideingangsöffnung herrschende Eingangsdruck in eine Schließrichtung des Ventilstößels wirkt, der ausgangsseitigen Querschnittsfläche der mindestens einen axialen Fluiddurchtrittsöffnung entspricht. Dann nämlich wirkt auf den auf der Ausgangsseite der Fluiddurchtrittsöffnung angeordneten Ventilkörper des Ventilstößels dieselbe Druckkraft in entgegengesetzter Richtung, wie die den Ventilstößel in Schließrichtung drängende, durch den Eingangsdruck hervorgerufene Druckkraft.
Die Druckrückführpassage, mittels der der Ausgangsdruck (Regeldruck) auf die elastische Membran geleitet wird, kann beispielsweise in einer Wandung des Gehäuses verlaufen. Bevorzugt ist es allerdings, wenn die Druckrückführpassage den Ventilstößel durchsetzt. Der Bauraum des Ventils kann auf diese Weise klein gehalten werden. Beispielsweise kann die Druckrückführpassage als zentrale axiale Bohrung im Ventilstößel realisiert sein.

Wirkflächen des Ventilstößels und der Membran, auf die der stromabwärts des Ventilsitzes herrschende Ausgangsdruck wirkt, sind so gestaltet, dass sich an diesen Wirk-Flächen anliegende axiale Druckkräfte addieren.

Der Ventilstößel kann durch axiale Federvorbelastung in eine Offenstellung des Sitzventils gedrängt werden. Dabei ist eine Grundposition des Ventilstößels, beispielsweise eine Position bei der am Fluidausgang und an der Fluideingangsöffnung Atmosphärendruck anliegt, mittels eines mechanischen Stellglieds einstellbar. Alternativ oder zusätzlich kann die Grundposition des Ventilstößels mittels eines elektromagnetischen Antriebs eingestellt werden.

Das erfindungsgemäße Druckminderventil kann als eigenständiges Ventil ausgebildet sein, an welches eine Druckeingangsleitung und eine Druckausgangsleitung angeschlossen werden. Alternativ kann das Druckminderventil als Patrone zum Einsetzen in einen Ventilblock ausgebildet sein. Dazu weist das Druckminderventil eine umlaufende Dichtfläche auf einer äußeren Oberfläche des Gehäuses auf, welches mit einem umlaufenden Dichtelement, beispielsweise einem oder mehreren O-Ringen, zusammenwirken kann. Das umlaufende Dichtelement kann Bestandteil des Druckminderventils sein. Das Druckminderventil ist so ausgelegt, dass der Eingangsdruck zwischen 1 und 10 bar, vorzugsweise zwischen 0,5 und 12 bar, schwanken kann und der konstante Ausgangsdruck zwischen 0,5 und 1 bar einstellbar oder eingestellt ist. Bei einem Eingangsdruck von nur 0,5 bar, kann der konstante Ausgangsdruck selbstverständlich nicht auf 1 bar sondern nur auf 0,5 bar geregelt werden. Diese Funktionalität lässt sich mit einem erfindungsgemäßen Druckminderventil mit erstaunlich geringer Baugröße realisieren und macht es daher für den Einsatz in einem Luftfedersystem eines Kraftfahrzeugfahrwerks, wo es gerade auf Größe und Gewicht ankommt, besonders geeignet. Sofern höhere Drücke herunterzuregeln sind, können zwei erfindungsgemäße Druckminderventile in Reihe geschaltet werden.

Die elastische Membran ist vorzugsweise eine Elastomermembran. Als besonders geeignet hat sich eine Membran mit folgenden Merkmalen erwiesen: NBR-Gummi (Nitrid-Butadien-Rubber) mit einer Härte von 70 Shore A, einer Dicke von 0,3 mm und einem Außendurchmesser von 14 mm (mit zentraler Bohrung zur Befestigung am Ventilstößel). Die Härte kann zwischen 60 und 80 Shore A liegen, die Dicke zwischen 0,2 und 0,4 mm und/ oder der Außendurchmesser zwischen 5 und 30 mm.

Auch der Ventilsitz umfasst vorzugsweise eine elastomere Sitzfläche, die allerdings nur zum Einsatz kommt, wenn der am Verbraucher anliegende Druck den zur Verfügung gestellten Eingangsdruck übersteigt und das Ventil schließt.

Zur Trennung der Hochdruck- und Niederdruck-Kammern innerhalb des Gehäuses, also einerseits der Kammer, an der der Eingangsdruck anliegt, und andererseits der an die elastische Membran angrenzenden Kammer, in die der Ausgangsdruck (Regeldruck) durch die Druckrückführpassage geleitet wird, kann eine dynamische Dichtung vorgesehen sein. Besonders bevorzugt wird dafür die in der DE 10 2011 082 007 B3 beschriebene dynamische Dichtung eingesetzt. In Bezug auf den Aufbau einer solchen dynamischen Dichtung wird der Inhalt der DE 10 2011 082 007 B3 explizit in Bezug genommen. Der Einsatz einer dynamischen Dichtung verhindert jegliche Leckageströme zwischen den Hochdruck- und Niederdruckkammern.

Zur Vermeidung von Hystereseeinflüssen auf die Druckregelung wird jedoch eine Spaltdichtung bevorzugt. Spaltdichtungen können durch geeignete Materialpartner nahezu reibungslos ausgestaltet werden. So kann in dem Gehäuse des Druckminderventils eine Hülse vorgesehen sein, in der der Ventilstößel axial gleitet, wobei die Hülse vorteilhaft aus Polytetrafluorethylen (PTFE) bestehen kann, während der Ventilstößel beispielsweise aus Aluminium besteht. Andere reibungsarme Materialien, die anstelle des Polytetrafluorethylens einsetzbar sind, sind aufgrund ihrer preiswerten Herstellbarkeit insbesondere Kunststoffe. Die Spaltweite des Radialspalts liegt vorzugsweise im Bereich von 0,01 bis 0,08 mm. Die Länge des Spalts beträgt mindestens 5 mm, vorzugsweise mindestens 15 mm. Alternativ kann das Gehäuse selbst aus PTFE bestehen und die Hülse ersetzen.

Die Spaltdichtung bringt allerdings den Nachteil mit sich, dass eine minimale Leckage von der Hochdruckkammer (Eingangsdruck) zu der an die elastische Membran angrenzenden Niederdruckkammer (Ausgangsdruck bzw. Regeldruck) besteht. Dies ist solange für die Regelgüte ohne Relevanz, wie der vom Verbraucher abgenommene Volumenstrom größer ist, als der Leckagenstrom durch die Spaltdichtung. Nimmt der Verbraucher aber keinen Volumenstrom mehr ab, so ist es vorteilhaft, ein Sperrventil mit dem Druckminderventil in Reihe zu schalten, so dass der Druck am Ausgang des Druckminderventils nicht ansteigt. Dieses Sperrventil wird vorteilhaft vor das Druckminderventil geschaltet, kann aber auch stromabwärts des Druckminderventils vorgesehen werden.

Mittels der Spaltdichtung wird die Reibung innerhalb des Druckminderventils und damit eine Hysterese der Druckregelung nahezu eliminiert, so dass mit geometrisch kleinen und kompakten Bauteilen und mit geringen Stellkräften eine sehr gute Regelgüte erreichbar ist.

Nachfolgend wird die Erfindung anhand der begleitenden Zeichnungen beispielhaft beschrieben. Darin zeigen:
Figur 1 ein Druckminderventil in perspektivischer Darstellung,
Figur 2 das Druckminderventil aus Figur 1 im Querschnitt gemäß einem ersten Ausführungsbeispiel,
Figur 3 das Druckminderventil aus Figur 1 gemäß einem zweiten Ausführungsbeispiel,
Figur 4 ein Druckminderventil gemäß einem dritten Ausführungsbeispiel in Patronen-Bauweise und
Figur 5 ein Druckminderventil gemäß einem vierten Ausführungsbeispiel wiederum in Patronen-Bauweise wie in Figur 4, jedoch mit elektromagnetischer Stelleinrichtung.

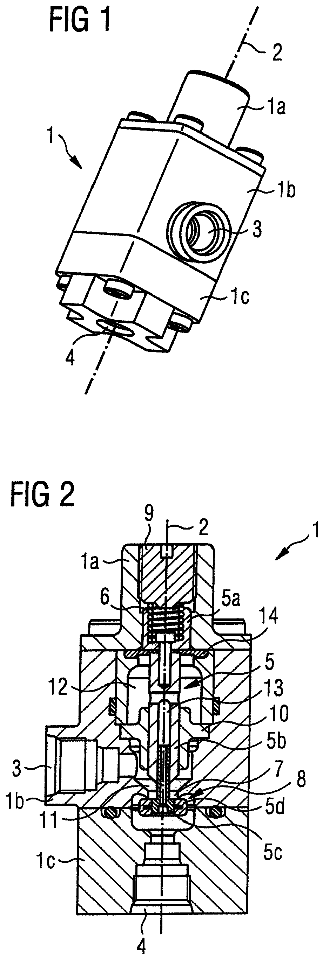

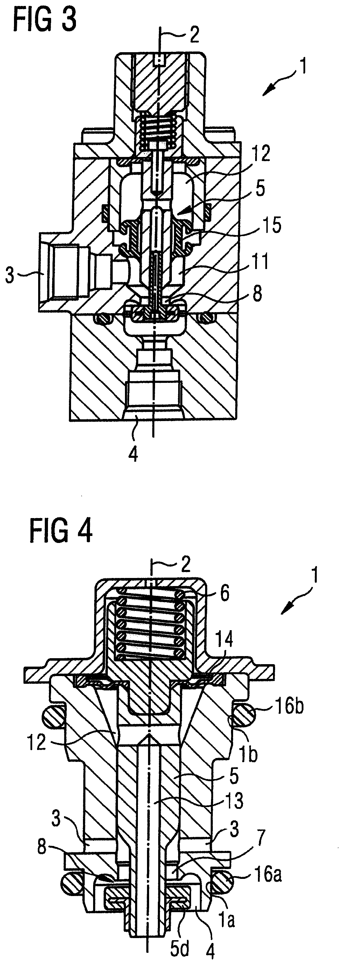

Figur 1 zeigt ein Druckminderventil in perspektivischer Darstellung mit einem Gehäuse 1, einer allgemeinen Längsachse 2, einer radialen Fluideingangsöffnung 3 und einer axialen Fluidausgangsöffnung 4. Figuren 2 und 3 zeigen zwei alternative Ausführungsbeispiele dieses Druckminderventils im Querschnitt.

Das Gehäuse 1 ist mehrteilig aufgebaut und besteht bei den Ausführungsbeispielen gemäß Figuren 1 bis 3 aus drei Gehäuseteilen 1a, 1b, 1c. In dem Gehäuse ist ein Ventilstößel 5 axial verschieblich gelagert. Der Ventilstößel 5 ist ebenfalls mehrteilig ausgebildet. Ein erstes axiales Ende des Ventilstößels 5 wird durch den Ventilstößelteil 5a gebildet und stützt sich gegen eine Vorspannfeder 6 im Gehäuseteil 1a ab. Das zweite axiale Ende des Ventilstößels 5 wird durch den Ventilstößelteil 5c gebildet, der einen Ventilkörper 5d aufweist, welcher zusammen mit einer Fluiddurchtrittsöffnung 7 in dem mittleren Gehäuseteil 1b ein Sitzventil 8 bildet. Der Ventilkörper 5d besteht aus einem elastomeren Material. Die Ventilstößelteile 5a und 5c, welche die beiden axialen Enden des Ventilstößels 5 bilden, sind durch einen mittleren Ventilstößelteil 5b fest miteinander verbunden. Die Federkraft der Vorspannfeder 6 drängt den Ventilstößel 5 in eine Offenstellung des Sitzventils 8, so dass das Sitzventil öffnet, sobald der am Druckausgang 4 anliegende Ausgangsdruck einen voreingestellten Wert unterschreitet. Liegt der Ausgangsdruck dagegen auf dem mittels der Vorspannfeder 6 eingestellten Wert und nimmt der Verbraucher kein Fluid ab, oder steigt der Ausgangsdruck sogar über den voreingestellten Wert an, so schließt das Sitzventil 8 gegen die Vorspannkraft der Vorspannfeder 6. Diese Vorspannkraft ist mittels einer Verstellschraube 9 im Gehäuseteil 1a, gegen die sich die Vorspannfeder 6 abstützt, mechanisch einstellbar.

Der zentrale Ventilstößelteil 5b ist in einer ortsfest angeordneten Hülse 10 axial verschieblich gelagert. Durch geeignete Wahl für die Materialpaarung Hülse-Ventilstößel kann diese Lagerung nahezu reibungsfrei ausgebildet sein. Beispielsweise können die Hülse 10 aus Polytetrafluorethylen (PTFE) und der zentrale Ventilstößelteil 5b aus poliertem Aluminium oder ebenfalls aus Kunststoff bestehen. Die Hülse 10 bildet gemeinsam mit dem zentralen Ventilkörperteil 5b eine Spaltdichtung, welche zwei Gehäusekammern 11 und 12 voneinander trennt. Die erste Kammer 11 ist eine Hochdruckkammer, in welcher der an der Fluideingangsöffnung 3 anliegende Eingangsdruck wirkt. Die zweite Kammer 12 ist eine Niederdruckkammer, in welcher der stromabwärts des Sitzventils 8 anliegende Ausgangsdruck wirkt. Zu diesem Zweck durchsetzt den Ventilstößel 5 eine Druckrückführpassage 13, durch welche hindurch der Ausgangsdruck in die Niederdruckkammer 12 geleitet wird.

Die Niederdruckkammer 12 wird an einem axiale Ende durch eine Membran 14 begrenzt, welche außenseitig ortsfest am Gehäuse 1 fixiert ist und innenseitig am beweglich gelagerten Ventilstößel befestigt ist. Auf der einen Seite der Membran 14, nämlich in der Niederdruckkammer 12, herrscht somit der Ausgangs- bzw. Regeldruck. Auf der gegenüberliegenden Seite der Membran herrscht zu jeder Zeit Atmosphärendruck. Die Membran 14 ist elastisch. Dementsprechend wird ein sich ändernder Ausgangsdruck stromabwärts des Sitzventils 8 durch die Druckrückführpassage 13 in die Hochdruckkammer 12 geleitet und übt dort eine sich entsprechend ändernde Druckkraft auf die elastische Membran 14 aus, welche aufgrund ihrer Kopplung mit dem Ventilstößel 5 dafür sorgt, dass sich der Ventilstößel 5 entsprechend der Druckkraftveränderung in die eine oder andere axiale Richtung verschiebt. Auf diese Weise wird der Ausgangsdruck bzw. Regeldruck auf den Ventilstößel 5 zurückgeführt, so dass mittels des Druckminderventils der Ausgangsdruck geregelt wird.

Um zu erreichen, dass diese Druckregelung möglichst unabhängig von dem an der Fluideingangsöffnung 3 anliegenden Eingangsdruck ist, sind die Wirkflächen des Ventilstößels, auf die der Eingangsdruck wirkt (das sind die Wirkflächen des Ventilstößels in der Hochdruckkammer 11), so gestaltet, dass sich an diesen Wirkflächen anliegende axiale Druckkräfte gegenseitig kompensieren. So wird erreicht, dass der Eingangsdruck keine axiale Stellkraft auf den Ventilstößel 5 ausübt. Konkret wird dies in den Ausführungsbeispielen gemäß Figuren 2 und 3 dadurch erreicht, dass der mittlere Ventilstößelteil 5b eine Querschnittsfläche besitzt, die dem austrittsseitigen Querschnitt der Fluiddurchtrittsöffnung 7 entspricht, und der Ventilkörper 5d des Ventilstößels 5 diese Fluiddurchtrittsöffnung 7 von der Austrittsseite her verschließt. Wie leicht anhand der Darstellung gemäß Figur 2 verifizierbar ist, wirken dann auf den Ventilstößel 5 einerseits in der Hochdruckkammer 11 axiale Druckkräfte auf den zentralen Ventilstößelteil 5b (entgegen der Federvorbelastung) und andererseits axiale Druckkräfte in entgegengesetzte Richtung auf den Ventilstößelteil 5c und Ventilkörper 5d im Bereich der Fluiddurchtrittsöffnung 7, wobei sich diese Druckkräfte aufgrund der identischen Querschnittflächen gegeneinander aufheben.

Während die axialen Wirkflächen des Ventilstößels im Bereich der Hochdruckkammer 11 so gestaltet sind, dass sich an diesen Wirkflächen anliegende axiale Druckkräfte gegenseitig kompensieren, ist der Ventilstößel 5 bezüglich des daran anliegenden und durch die Druckrückführpassage 13 rückgeführten Ausgangsdrucks so gestaltet, dass sich die am Ventilstößelteil 5c anliegenden axial wirkende Druckkräfte und die an der Membran 14 anliegenden axialen Druckkräfte addieren.

Mittels des mechanischen Stellglieds 9 lässt sich das Druckminderventil auf einen konstanten Ausgangsdruck zwischen 0,5 und 1 bar einstellen. Es sind auch andere, insbesondere auch höhere Drücke mit anderen Federkräften möglich. Das Ventil eignet sich für Systeme mit Eingangsdrücken bis zu 12 bar. Da toleranzbedingt der Einfluss des Eingangsdrucks auf die Druckregelung nicht vollständig vermeidbar ist, können bei sehr großen Druckdifferenzen zwischen dem Eingangsdruck und dem Ausgangsdruck, in dem konkreten Beispiel somit bei Druckdifferenzen von mehr als 12 bar, zwei solche Druckminderventile in Reihe geschaltet werden, um dann Druckdifferenzen von über 20 bar zu regeln.

Das Druckminderventil baut relativ klein. Die quadratische Querschnittsfläche des Gehäuses 1 hat eine Kantenlänge von 30 mm × 30 mm. Die gesamte axiale Baulänge beträgt nur 67 mm. Der Durchmesser des Ventilstößels im Bereich des in der Hülse 10 gelagerten zentralen Ventilstößelteils 5b beträgt lediglich 5,8 mm, und entsprechend klein ist auch der Durchmesser der Fluiddurchtrittsöffnung 7. Die Membran 14 hat einen Außendurchmesser von nur etwa 14 mm, ggf. ± 50%.

Während die nahezu reibungsfreie Spaltdichtung des Druckminderventils gemäß dem Ausführungsbeispiel nach Figur 2 nur minimale Hysterese aufweist, so ist doch ein Fluidstrom zwischen der Hochdruckkammer 11 und Niederdruckkammer 12 nicht vollständig zu vernachlässigen. Zwar ist dieser Einfluss während des Betriebs des Druckminderventils unbedeutend. Wenn das Druckminderventil aber schließt, weil am Verbraucher, das heißt an der Fluidausgangsöffnung 4, ein relativ hoher Druck anliegt oder kein Volumenstrom vom Verbraucher abgenommen wird, dann können diese Leckageströme vom Druckspeicher durch die Spaltdichtung hindurch zum Verbraucher unerwünscht sein. Für diesen Fall ist es zweckmäßig, dem Druckminderventil ein Sperrventil unmittelbar nachzuschalten oder vorzugsweise unmittelbar vorzuschalten (nicht dargestellt).

Das Ausführungsbeispiel gemäß Figur 3 unterscheidet sich von dem Ausführungsbeispiel gemäß Figur 2 dadurch, dass anstelle der zuvor beschriebenen Spaltdichtung eine dynamische Dichtung vorgesehen ist. Die dynamische Dichtung, welche typischerweise aus einem Elastomermaterial besteht, bietet den Vorteil, dass Leckageströme zwischen der Hochdruckkammer 11 und Niederdruckkammer 12 vollkommen vermieden werden. Dagegen besitzt dieses Druckminderventil jedoch eine größere Hysterese aufgrund der höheren Reibungskräfte zwischen der dynamischen Dichtung 15 und dem Ventilstößel 5.

Figur 4 zeigt ein drittes Ausführungsbeispiel eines Druckminderventils, welches sich funktional nicht wesentlich von dem Ausführungsbeispiel gemäß Figur 2 unterscheidet. Bauartbedingt ist die Federverspannkraft vorgegeben und nicht einstellbar. Insbesondere ist auch hier eine Spaltdichtung zwischen dem Ventilstößel 5 und dem Gehäuse 1 realisiert. Dazu kann das Gehäuse insgesamt aus einem entsprechend reibungsarmen Material wie Polytetrafluor-ethylen (PTFE) oder einem anderen Kunststoff ausgebildet sein, wie in Figur 4 gezeigt, oder es kann eine zusätzliche Hülse, ähnlich der Hülse 10 in Figur 2, zwischen dem Ventilstößel 5 und dem Gehäuse 1 vorgesehen werden (nicht dargestellt). Im übrigen besteht der wesentliche Unterschied dieses dritten Ausführungsbeispiels gemäß Figur 4 gegenüber den zuvor beschriebenen Ausführungsbeispielen darin, dass das Druckminderventil als "Patrone" ausgeführt ist, welche in dichtender Weise in einen entsprechenden Ventilblock einsetzbar ist. Anders als das in den Figuren 1 bis 3 dargestellte Druckminderventil ist das Druckminderventil in Patronenform gemäß Figur 4 bezüglich der allgemeinen Längsachse 2 rotationssymmetrisch aufgebaut, was jedoch nicht zwingend ist. Am Umfang des Gehäuses 1 sind Dichtflächen 1a und 1b vorgesehen, die mit entsprechenden Dichtelementen 16a und 16b, vorzugsweise O-Ringen, zusammenwirken. Je nach Anwendungsfall können auch mehr oder gegebenenfalls weniger Dichtflächen und Dichtelemente vorhanden sein.

Anders als die Darstellungen der Ausführungsbeispiele gemäß Figuren 2 und 3 ist das Druckminderventil gemäß Figur 4 mit einem in Offenstellung befindlichen Ventilsitz 8 dargestellt, was dem typischen Betriebszustand entspricht. Anhand der Figur 4 soll nachfolgend noch einmal das Funktionsprinzip erläutert werden. An der Druckeingangsöffnung 3 liegt beispielsweise ein Druck von 10 bar an, der durch die Drosselwirkung des Sitzventils 8 auf einen Ausgangsdruck von beispielsweise 0,5 bar heruntergeregelt wird. Ändert sich nun der Eingangsdruck, weil beispielsweise ein Druckspeicher eines Kraftfahrzeugluftfedersystems nur noch einen geringeren Druck zur Verfügung stellt, auf beispielsweise 5 bar, so hat die sich ändernde Druckdifferenz zwischen Eingangsdruck und Ausgangsdruck von 9,5 bar auf 4,5 bar einen geringeren Volumenstrom durch das Sitzventil 8 hindurch zur Folge. Der verringerte Volumenstrom bedingt einen Druckabfall des Ausgangsdrucks auf einen Wert unter 0,5 bar. Dieser reduzierte Ausgangsdruck wird durch die Druckrückführpassage 13 hindurch in die Niederdruckkammer 12 geleitet. Auf die elastische Membran 14 wirkt somit ein niedrigerer Druck, so dass die Vorspannkraft der Vorspannfeder 6 eine axiale Verlagerung des Ventilstößels 5 in Richtung einer vergrößerten Offenstellung des Sitzventils 8 zur Folge hat. Dementsprechend fließt mehr Fluid durch das Sitzventil 8 hindurch zur Fluidausgangsöffnung 4, der Druck an der Fluidausgangsöffnung 4 steigt entsprechend an, und es regelt sich wieder das voreingestellte Druckniveau von 0,5 bar an der Druckausgangsöffnung 4 ein.

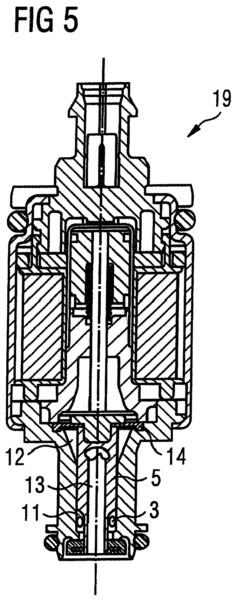

Figur 5 zeigt ein Druckminderventil gemäß einem vierten Ausführungsbeispiel, welches sich von dem Druckminderventil gemäß Figur 4 allein dadurch unterscheidet, dass ein elektromagnetisches Stellglied 19 vorgesehen ist. Auch in den anderen Ausführungsbeispielen kann anstelle des mechanischen Stellglieds 9 das elektromagnetische Stellglied 19 vorgesehen werden. Es ist auch möglich, das mechanische Stellglied 9 und das elektromagnetisches Stellglied 19 in Kombination vorzusehen.

## Patentansprüche

1. Druckminderventil, vorzugsweise für Pneumatiksysteme wie z.B. Luftfederungen von Kraftfahrzeugen, welches bei schwankendem Eingangsdruck einen annähernd konstanten Ausgangsdruck bereitstellt, umfassend
- ein Gehäuse (1) mit einer allgemeinen Längsachse (2), mindestens einer Fluideingangsöffnung (3) und mindestens einer axialen Fluiddurchtrittsöffnung (7),
- einen in dem Gehäuse entlang der Längsachse (2) verschieblich gelagerten Ventilstößel (5) mit einem Ventilkörper (5d), der mit der mindestens einen axialen Fluiddurchtrittsöffnung (7) zusammen ein Sitzventil (8) bildet,
- eine ortsfest in dem Gehäuse angeordnete und mit dem Ventilstößel gekoppelte, elastische Membran (14), welche zwei axial wirkende Differenzdruckflächen bildet, und
- eine Druckrückführpassage (13), die einen stromabwärts des Sitzventils (8) herrschenden Ausgangsdruck auf eine der beiden Differenzdruckflächen der elastischen Membran (14) leitet,
wobei die Wirkflächen des Ventilstößels (5), auf die ein an der mindestens einen Fluideingangsöffnung (3) herrschender Eingangsdruck wirkt, so gestaltet sind, dass sich an diesen Wirkflächen anliegende axiale Druckkräfte gegenseitig so kompensieren, dass der Eingangsdruck keine axiale Stellkraft auf den Ventilstößel (5) ausübt.

2. Druckminderventil nach Anspruch 1, wobei an der anderen der beiden Differenzdruckflächen der elastischen Membran (5) Atmosphärendruck anliegt.

3. Druckminderventil nach Anspruch 1 oder 2, wobei die Druckrückführpassage (13) den Ventilstößel (5) durchsetzt, wobei bevorzugt Wirkflächen des Ventilstößels (5) und der Membran (14), auf die der stromabwärts des Ventilsitzes (8) herrschende Ausgangsdruck wirkt, so gestaltet sind, dass sich an diesen Wirkflächen anliegende axiale Druckkräfte addieren.

4. Druckminderventil nach einem der Ansprüche 1 bis 3, wobei die mindestens eine Fluideingangsöffnung (3) bezogen auf die allgemeine Längsachse (2) des Gehäuses (1) eine radiale Durchtrittsöffnung ist.

5. Druckminderventil nach einem der Ansprüche 1 bis 4, wobei der mindestens eine Ventilkörper (5d) des Ventilstößels (5) die mindestens eine axiale Fluiddurchtrittsöffnung (7) ausgangsseitig verschließt und eine maximale radiale Querschnittsfläche des Ventilstößels (5) in einem Bereich des Ventilstößels, in dem der an der mindestens einen Fluideingangsöffnung (3) herrschende Eingangsdruck in eine Schließrichtung des Ventilstößels (5) wirkt, der ausgangsseitigen Querschnittsfläche der mindestens einen axialen Fluiddurchtrittsöffnung (7) entspricht.

6. Druckminderventil nach einem der Ansprüche 1 bis 5, wobei der Ventilstößel (5) durch axiale Federvorbelastung (6) in eine Offenstellung des Sitzventils (8) gedrängt wird.

7. Druckminderventil nach einem der Ansprüche 1 bis 6, wobei eine Grundposition des Ventilstößels (5) mittels eines mechanischen Stellglieds (9) einstellbar ist und/ oder wobei eine Grundposition des Ventilstößels (5) mittels eines elektromagnetischen Stellglieds (19) einstellbar ist.

8. Druckminderventil nach einem der Ansprüche 1 bis 7, umfassend mindestens eine umlaufende Dichtfläche (1a, 1b) auf einer äußeren Oberfläche des Gehäuses (1) zum Zusammenwirken mit mindestens einem umlaufenden Dichtelement (16a, 16b), so dass das Druckminderventil als Patrone in dichtender Weise in einen Ventilblock einsetzbar ist.

9. Druckminderventil nach einem der Ansprüche 1 bis 8, wobei der Eingangsdruck zwischen 1 und 10 bar, vorzugsweise zwischen 0,5 und 12 bar, schwanken kann und/ oder wobei der konstante Ausgangsdruck zwischen 0,5 und 1 bar liegt.

10. Druckminderventil nach einem der Ansprüche 1 bis 9, wobei die elastische Membran (5) eine Elastomermembran ist, die vorzugsweise eine Shore A Härte zwischen 60 und 80, eine Dicke zwischen 0,2 und 0,4 mm und einen Außendurchmesser zwischen 5 und 30 mm, besonderes bevorzugt eine Härte von 70 Shore A, eine Dicke von 0,3 mm und/oder einen Außendurchmesser zwischen 7 und 21 mm, besitzt.

11. Druckminderventil nach einem der Ansprüche 1 bis 10, wobei der Ventilsitz (8) eine elastomere Sitzfläche umfasst.

12. Druckminderventil nach einem der Ansprüche 1 bis 11, wobei zwischen dem Ventilstößel (5) und dem Gehäuse eine elastomere dynamische Dichtung (15) vorgesehen ist, welche einen Kammer (11) des Gehäuses (1), in der der an der mindestens einen Fluideingangsöffnung (3) herrschende Eingangsdruck wirkt, gegen eine Kammer (12) des Gehäuses (1), in der der durch die Druckrückführpassage (13) geleitete, stromabwärts des Sitzventils (8) herrschende Ausgangsdruck wirkt, dichtet; oder
wobei radial zwischen dem Ventilstößel (5) und dem Gehäuse (1) eine Spaltdichtung vorgesehen ist, welche eine Kammer (11) des Gehäuses (1), in der der an der mindestens einen Fluideingangsöffnung (3) herrschende Eingangsdruck wirkt, gegen eine Kammer (12) des Gehäuses (1), in der der durch die Druckrückführpassage (13) geleitete, stromabwärts des Sitzventils (8) herrschende Ausgangsdruck wirkt, dichtet, wobei die Spaltdichtung vorzugsweise eine radiale Spaltweite zwischen 0,1 und 0,8 mm und eine Spaltlänge von mindestens 5 mm, besonderes bevorzugt mindestens 15 mm, besitzt.

13. Druckminderventil nach Anspruch 12, umfassend ein der Fluid- eingangsöffnung (3) vorzugsweise vorgeschaltetes oder ein der Fluiddurchtrittsöffnung (7) nachgeschaltetes Sperrventil.

14. Luftfedersystem eines Kraftfahrzeugfahrwerks, umfassend mindestens ein Druckminderventil nach einem der Ansprüche 1 bis 13.

15. Luftfedersystem nach Anspruch 14, umfassend einen Druckspeicher, der den an der Fluideingangsöffnung (3) des Druckminderventils herrschenden Eingangsdruck zur Verfügung stellt und je nach Füllzustand einen schwankenden Speicherdruck besitzt und/ oder wobei zwei Druckminderventile nach einem der Ansprüche 1 bis 13 in Reihe geschaltet sind.
